# EUROPEAN PATENT SPECIFICATION

(11) **EP 2 621 664 B1**
(45) Date of publication and mention of the grant of the patent: **27.01.2021**
(21) Application number: 10857979.8
(22) Date of filing: 29.09.2010
(51) Int. Cl.: B23K 26/20, B23K 26/14, H01S 3/10, H01S 3/067, B23K 103/14

(54) **SYSTEM AND METHOD UTILIZING FIBER LASERS FOR TITANIUM WELDING USING AN ARGON COVER GAS**
SYSTEM UND VERFAHREN UNTER VERWENDUNG VON FASERLASER FÜR TITANSCHWEISSEN MIT EINEM ARGONSCHUTZGAS
SYSTÈME ET PROCÉDÉ METTANT EN OEUVRE DES LASERS À FIBRE POUR LE SOUDAGE DU TITANE AU MOYEN D'UN GAZ DE COUVERTURE ARGON

(43) Date of publication of application: 07.08.2013
(73) Proprietor: IPG Photonics Corporation, Oxford, Massachusetts 01540 (US)
(72) Inventor: GAPONTSEV, Valentin, MA 01540 (US); BAKER, Charlie, MA 01540 (US); LYONS, Michael, MA 01540 (US); SHKURIKHIN, Oleg, MA 01540 (US); ALZAGA, Roberto, San Juan PR 00917 (US); COLMAN, Darrell, Ham Lake MN 55304 (US); FAVRE-BULLE, Sebastian, CH-Morges (VD) (CH)
(74) Representative: Kohlmann, Kai
(86) International application number: PCT/US2010/050626
(87) International publication number: WO 2012/044285

(56) References cited:
- WO-A1-2010/005025
- JP-A- 2001 205 465
- KR-A- 970 033 389
- KR-A- 20030 041 125
- US-A1- 2007 007 254

## Description

The present invention relates to a method for welding titanium or titanium alloys with a fiber laser and using an inert cover gas. Specifically, the present invention relates to the reduction of contamination in a weld by narrowing the bandwidth of a fiber laser that is acting on a titanium or titanium alloy workpiece thus reducing or eliminating optical interaction between the laser beam with the cover gas.

### 2. Description of the Related Art

Recent technological developments in fiber laser technology have expanded the capabilities for laser welding. In addition, these developments have changed the cost dynamics of laser welding in many ways.. Now, new compact and air cooled pulse mode fiber lasers are available with pulse durations up to 20ms and a peak power level of up to 6kW. Unfortunately, using these standard broad band fiber lasers for specific application involving titanium or titanium alloys and inert cover gas led to unintended consequences and as will be discussed the degradation of weld quality.

In general, the major advantage of laser beam welding is the lower heat input into the part that minimizes welding stresses and reduces distortion. This is achieved by the high energy density of the beam which produces a small fusion zone with high welding speeds. Titanium materials can be welded without a filler metal and with the use of an effective shielding gas to avoid contamination. Also, laser welding has the advantage of high productivity and ease of automation that helps reduce manufacturing costs. All of these benefits have increased the use of laser welding in such areas as medical device manufacturing.

Titanium is an excellent corrosion resistant and biocompatible material that is used widely in precision or aesthetic oriented applications such as those in the medical devices industry. However, titanium can easily react with low density elements like oxygen, and nitrogen, which requires that the welding region be thoroughly shielded by an inert gas to avoid contamination from air, moisture, and/or other soot-forming hydro-carbonaceous matter during the welding process.

Lasers offer a wide range of welding capabilities such as spot, conduction, penetration and hybrid welding. Laser welding is performed virtually in every industry as it offers numerous benefits such as high welding speeds, short weld cycles, low heat input, low heat affected zone and minimal distortion.

A fiber laser is a laser in which the active gain medium is an optical fiber doped typically with rare-earth elements such as erbium or ytterbium (among others).

The advantages of fiber lasers over other types of lasers include the very high efficiencies typically over 30% of a wall plug. Further, it should be noted that fiber lasers are compact, compared to rod or gas type lasers of comparable power. The fiber's waveguiding properties eliminate thermal distortion of the optical path, producing a diffraction-limited, high-quality, optical beam. Fiber lasers also exhibit high vibrational stability and no maintenance during operation.

The good beam quality of fiber lasers coupled with high CW powers offers deep penetration welding, as well as shallow conduction mode welding but can yield difficulties in soot generation. Modulating these CW lasers offers pulsed laser capabilities with high peak and low average power for low heat input applications. High modulation frequencies on high power lasers up to 10 kW offer very high throughput in pulsed applications. The fiber delivery offers flexibility to integrate into conventional weld head, galvo heads, robotic are and remote welding systems. Whatever the beam delivery employed, fiber lasers offer unparallel performance.

Typical spot welding applications include galvo-based beam delivery that delivers high speed welding of products such razor blades, and HDD flexures that take advantage of the pulsed capabilities of the fiber lasers. Fiber lasers can be focused to small spot with extremely long focal lengths, thus remote laser welding capabilities with fiber lasers are highly enhanced. The benefit of large stand off in the order of 1-2 meters increases the work area multifold over conventional robotic systems. Such remote welding stations equipped with the fiber lasers include welding door panels, multiple welding of spot and lap welds all over the auto body frame.

The laser beam quality of the fiber laser (ability to focus to the smallest spot diameter) is superior to other solid state high power lasers (for example Nd:YAG). Also, because of the better beam quality, the stand-off distances of the focusing optics to the workpiece can be extended to achieve a clearance of two to four feet for some applications. These are some of the advantages in transferring welding applications to fiber lasers.

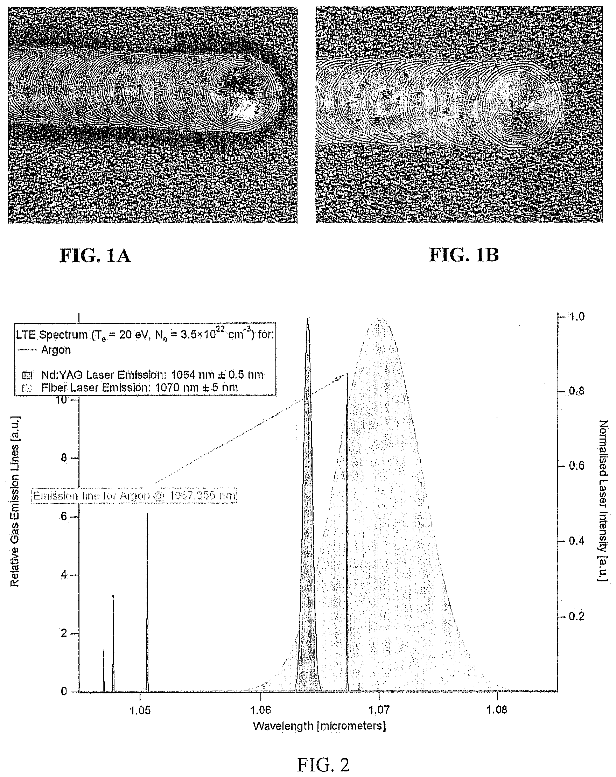

Referring to FIGS. 1A and 1B, what was not understood is why samples of titanium welded using the same laser parameters with a standard fiber laser and a Nd:YAG laser produce a substantially high soot content in the weld fiber laser finish. Referring to FIG. 1A, the sample welded with the fiber laser resulted in a more intense plasma formation and an inferior weld quality with higher levels of soot both embedded in the weld and on the edges of the weld confirmed visually and via chemical analysis. This unfortunate soot level in the fiber laser weld is unacceptable for the medical devices industry and was not understood before. Referring to Fig. IB, the sample welded with the Nd:YAG solid state laser produced a minimum quantity of soot on the edges of the weld only.

Accordingly, there is a need for an improved system and method for utilizing a fiber laser to affect a titanium or titanium alloy weld in the presence of an inert gas so as to reduce the effects of a higher plasma intensity and resulting contaminant content of the plasma.

### APECTS AND SUMMARY OF THE INVENTION

An aspect of the present invention is to provide an improved method for utilizing a fiber laser to affect a titanium or titanium alloy weld in the presence of an inert gas so as to reduce the contaminant content of the plasma formed during the welding process.

The present invention relates to a method for reducing contamination in the plasma of a weld produced by a fiber laser. The invention establishes the fiber laser in an optimal configuration for applying a high density beam, in a small fusion zone, to a weld material, additionally preferred with a top- hat beam profile having a square temporal shape. The beam from the fiber laser is applied at selected wavelength (1064nm as an example) in a narrow bandwidth (of +/- 0.5 nm as an example). An inert shielding gas is utilized in a cross-flow or glove box configuration around the welding region to prevent contamination. The inert shielding gas may be technically pure Argon or Helium. The method is optimized by maintaining a numerical aperture for the high density beam, a set of beam divergence properties, and calculating an optimal focus spot size while maintaining a narrow band width. The system can utilize a single laser input, or can utilize multiple lasers joined by coupling means and utilizing a switch to select one or more of the fiber lasers.

The method comprises a number of steps that begin with establishing the fiber laser in an optimal configuration for applying a high density beam of laser light, in a small fusion zone, to a metallic weld material that does not have a filler metal such as titanium, titanium alloy, and optionally nickel or copper. The beam of laser light is applied in a narrow bandwidth, to the weld material to form a weld in the welding region. The optimal narrow bandwidth is at 1064 nm +/- 0.5 nm, and particularly avoids the spectral lines for argon at 1050.65 and 1067.36 nm, for helium at 1066.76 nm or 1082.91 nm. An inert shielding gas, is utilized in a cross-flow or glove box configuration around the welding region to prevent contamination.

The present method also optionally involves the creation of a specific narrow bandwidth fiber laser to minimize an interaction with spectral lines of the cover gas and to minimize an interaction with the spectra of metal weld ions during welding. More than one spectral line may need to be avoided. Where a gas mixture is used as the cover gas or a metal alloy is used several spectral lines must be avoided. Spectral interaction with the narrow bandwidth fiber laser must be avoided.

The method further comprises the steps of determining and maintaining a suitable numerical aperture for the high density beam; establishing and maintaining a set of beam divergence properties; and, calculating an optimal focus spot size.

The optimal configuration for applying the high density beam of laser light, in the small fusion zone, is determined by selecting one or more characteristics from a list which includes: beam delivery; numerical aperture; spot size; spatial profile; temporal profile; pulse duration; pulse repetition rate; weld spots overlap; weld fixture; and the speed of the weld generation. If applied properly, the optimized configuration produces a bright, shiny, and oxide-free surface finish without soot.

### BRIEF DESCRIPTION OF THE DRAWINGS

FIG. 1A is a titanium weld with Ar cover gas and a conventional broad emission bandwidth fiber laser (1070nm +/-10nm).
FIG. IB is a titanium weld with Ar cover gas and a Nd:YAG solid state laser.
FIG. 2 is an illustrative emission spectrum for a fiber laser and Nd:YAG lasers with respect to argon spectral lines.
FIG. 3 is a block diagram of the components of the fiber laser welding system.
FIG. 4 is a block diagram of components of a fiber laser welding system where multiple lasers are joined by a coupling mechanism with switching feature.
FIG. 5 is a flowchart of the method flow of the present invention.

### DETAILED DESCRIPTION OF THE PREFERRED EMBODIMENTS

Reference will now be made in detail to several embodiments of the invention that are illustrated in the accompanying drawings. Wherever possible, same or similar reference numerals are used in the drawings and the description to refer to the same or like parts or steps. The drawings are in simplified form.

As noted earlier during simple substitution there was a surprisingly high soot generation when welding in an Argon (Ar) cover gas and substituting a solid state Nd:YAG laser at 1064nm with a conventional fiber laser at 1070nm using all other similar factors. This was unacceptable and during development of the present invention the inventors determined that the fiber laser-matter interaction was fundamentally different from Nd:YAG laser-matter interactions because the resulting plasma with the fiber laser indicated a much larger and brighter white/blue spectral signal when compared with a smaller less intense white/yellow spectral signal produced with Nd:YAG lasers.

Turning to FIG. 2, the determination of this interaction was supported by plotting the spectral (absorption/emission lines) for argon relative to the wavelengths of the fiber laser and Nd:YAG laser. This shows that the Ar line is overlapped by the fiber laser spectrum of 1070 and no lines within the Nd:YAG spectrum. To avoid this condition a new fiber laser was built to shift the central wavelength from 1070nm to 1064nm precisely to move away from the argon line at 1067.36 nm. As a result, it was determined that the proposed fiber laser is able to match the plasma behavior and the minimum soot generation level obtained using Nd:YAG lasers when welding using argon as a cover gas. Thus, the titanium welding is linked with the fiber laser emission spectrum and the combination between the ionized particles of titanium and argon in the plasma zone during fiber laser welding. Additionally, the fiber laser-titanium weld interaction may be further minimized by the use of alternative gases or mixed gases in shielding, a longer pulse with a lower pulse peak power level, a smaller spot size with a reduction in the peak power level to limit the intensity of the weld plasma.

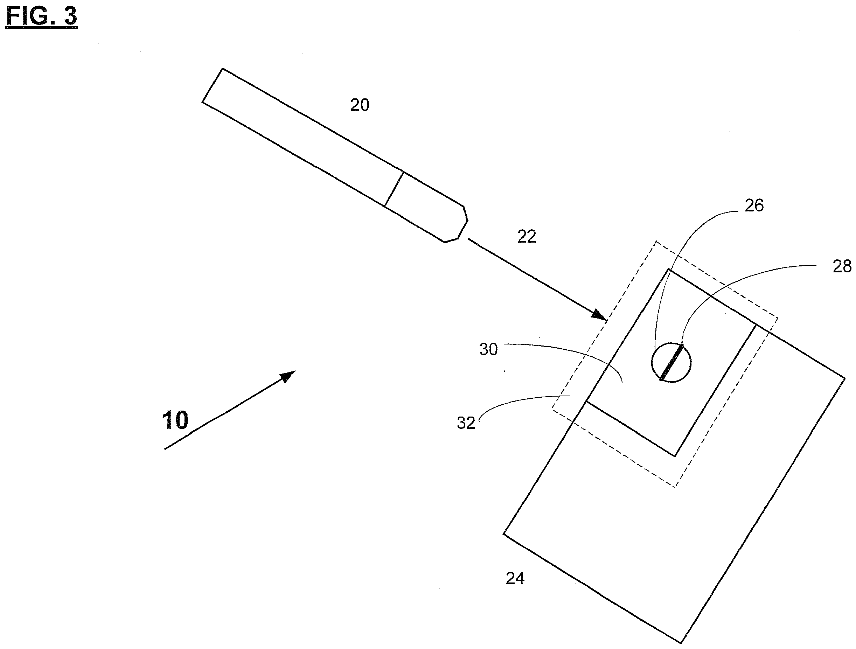

Turning to FIG. 3, the proposed system is shown as a block diagram of the components of the fiber laser welding system 10. A fiber laser 20 directs a high density beam 22 in a narrow bandwidth of 1064 nm +/- 0.5 nm. An example top- hat beam profile propagation with an M<2> = 38 can be measured for the output of the fiber laser. The welds are performed with a square temporal shape having a pulse duration of 1.25 milliseconds but other durations may be used of any range as may be required by the welding industry.

The beam 22 is directed into a welding region 30 having a small fusion zone 26 which allows a weld material 28, such as titanium, to form a weld on a workpiece 24. The weld may move as either the workpiece or the laser moves in use, or both.

An inert argon shielding gas is applied in a cross-flow region 32 (or all components can be placed into glove box with a controlled environment) which serves as a cover gas in the welding region 30 to prevent contamination of the weld. Commercial grade argon with purity 99.996% is optimally used. The gas shielding flow, orientation, and angle are optimized to obtain a bright, shiny and oxide free surface finish.

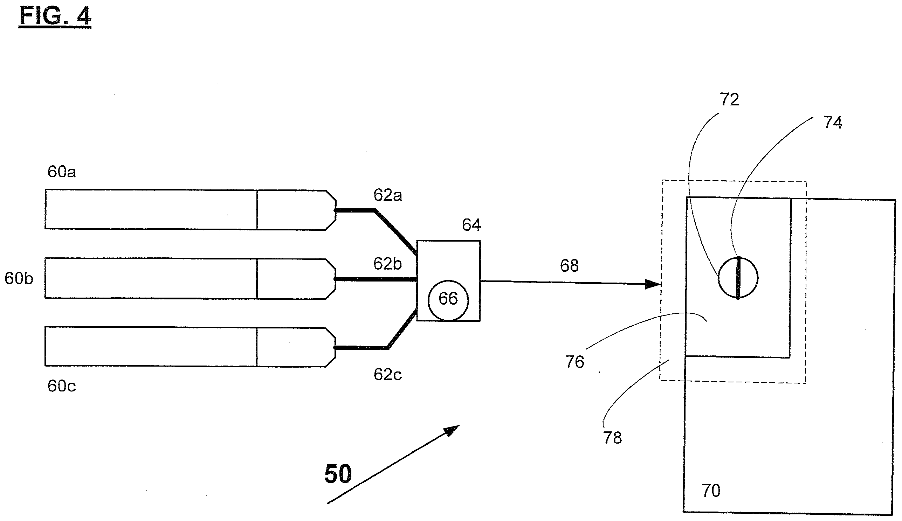

Turning to FIG. 4, a proposed system is shown as a block diagram of the components of the fiber laser welding system 50 similar to those in FIG. 3, but employing one of multiple pulsed fiber lasers 60a, 60b, and 60c via a coupler 64 and coupling paths 62a, 62b, and 62c to direct a high density beam 68 in a narrow bandwidth of 1064 nm +/- 0.5 nm. Beam 68 is directed into a welding region 76 having a small fusion zone 72 which allows a weld material 74, such as titanium, to form a weld on a workpiece 70.

An inert shielding gas, preferably argon, is applied in a cross-flow region 78 (or all components can be placed into glove box with a controlled environment) which serves as a cover gas in the welding region 76 to prevent contamination of the weld.

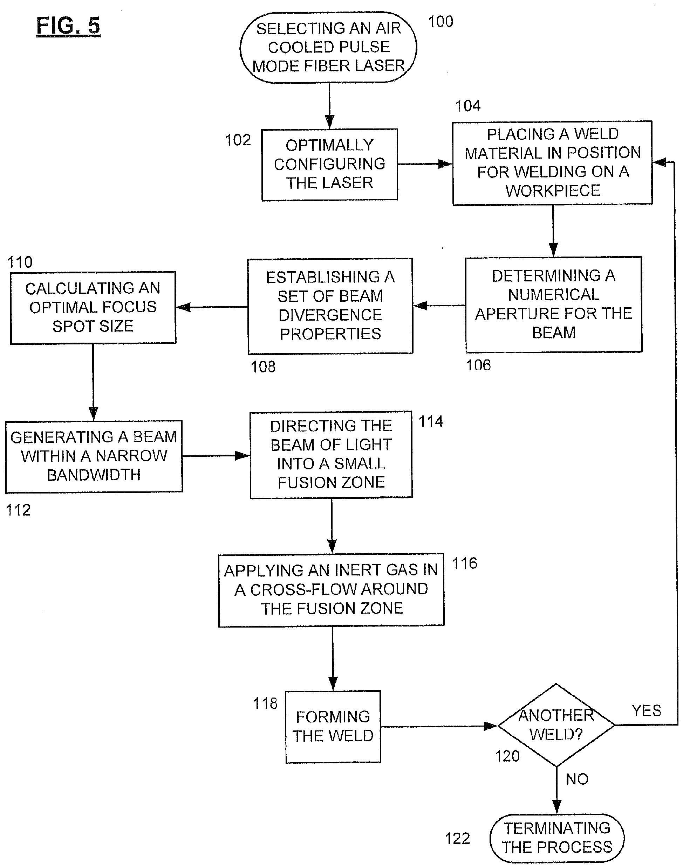

Turning then to FIG. 5, there is shown a flowchart of the method flow of the present invention. The flow begins at step 100 with the selection of an air cooled pulse mode fiber laser. The laser is 'configured', at step 102, for the task by adjusting for: beam delivery; numerical aperture; spot size; spatial profile; temporal profile; pulse duration; pulse repetition rate; weld spots overlap; weld fixture; and the speed of the weld process, weld material, and cover gas configuration. It is noted that the 'configured' step 102 may be adjusted in symbiosis with the steps of 104, 106, and 108 as will be understood so as to optimize the properties of the system and method. The settings made at this step can be readjusted at subsequent steps as required during a use.

From step 102, the flow advances to step 104 where a weld material, such as titanium, is placed in position on a workpiece. Step 104 can be performed prior to steps 100 and 102; the importance of the step lies in its being performed prior to generation of the laser beam.

As depicted in FIG. 5, the method flow advances from step 104 to step 106 where a numerical aperture is determined for the beam based on the position of the weld material within the small fusion zone of the workpiece. The flow then advances from step 106 to step 108 where a set of 'beam divergence' properties is established to avoid interaction between the wavelength output for the fiber laser's beam and the cover gas or combination of gases, and optionally the non- ferrous alloy to be welded in conjunction with step 102 as shown by the arrow to reach a maximum optimization. The embodiments tested included titanium, but others may be used by the system and the method. The flow then advances to step 110 where the optimal focus spot size is determined and input to the fiber laser.

From step 110, the flow advances to step 112 where the fiber laser generates a beam within a narrow bandwidth, here designated as 1064 nm +/- 0.5 nm due to the selected argon cover gas that allows the plasma of the weld to form without the contaminants that are found to form when outside the optimal range. The laser beam is then directed, at step 114, into a small fusion zone where the weld material is located on the workpiece. As the beam is working on the weld material, the system queries at step 116 as whether or not an inert gas is applied in a cross-flow around the fusion zone. If the response to the query is "YES," then an inert gas designated for the system to avoid spectral interference such as argon is applied in a cross-flow across the wok zone at step 116 (or all components can be placed into a controlled environment, e.g. a glove box.

From step 116, the flow advances to step 118 where the weld is formed on the workpiece. After the weld has been formed,the method queries at step 120 as to whether or not another weld is to be performed. If the response to the query is "YES," then the flow returns to step 104 where the weld material is placed in position for the next weld formation. If, however, the response to the query at step 120 is "NO," then the flow advances to step 122 where the process is terminated.

The welding results confirmed that the root cause of the stronger plasma behavior and higher soot generation with the 1070 nm fiber laser was due to the interaction between the laser wavelength output and the argon absorption/emission line at 1067.35nm. As a result, using the discovery, and the proposed systems and methods an improved behavior results with minimum soot generation similar to the Nd:YAG laser. The superior weld was the narrow bandwidth fiber laser at 1064 nm. This avoided additional interactions between the laser beam, the cover gas. and the weld material (titanium). Following the method steps will allow the same benefits for other cover gases and weld materials.

Having described at least one of the preferred embodiments of the present invention with reference to the accompanying drawings, it is to be understood that the invention is not limited to those precise embodiments, and that various changes, modifications, and adaptations may be effected therein by one skilled in the art without departing from the scope of the invention as defined in the appended claims.

## Claims

1. A method for laser beam welding, said method comprising the steps of: establishing an operative pulsed fiber laser (20) placed in a configuration for applying a high density beam of laser light in a narrow bandwidth on a fusion zone (26) to a weld material wherein said weld material is titanium or titanium alloy without a filler material; establishing spectral lines for a designated shielding gas wherein said shielding gas is argon or helium;
selecting an emission spectrum for said beam (22) of laser light; wherein said emission spectrum for said beam of laser light avoids said spectral lines for said shielding gas and wherein said step of selecting an emission spectrum for said beam (22) of laser light includes the step of selecting said beam of laser light in a bandwidth of 1064 nm +/- 0.5nm;
utilizing said shielding gas around said a welding region (30) to prevent contamination of said weld; and
applying said beam (22) of laser light to said weld material to form a weld in a welding region (30).

2. The method of claim 1, wherein:
said applying step further comprises the steps of: determining and maintaining a numerical aperture for said high density beam (20);
establishing and maintaining a set of beam divergence properties; and
calculating an optimal focus spot size.

3. The method of claim 1, wherein:
said configuration is determined by selecting from one or more characteristics from the group including: beam delivery; numerical aperture; spot size; spatial profile; temporal profile; pulse duration; pulse repetition rate; weld spots overlap; weld fixture; and, speed of said weld.

4. The method of claim 3, wherein:
said gas is argon and said titanium weld material thickness and said spot size has been optimized for a visual aspect of the weld.

## Patentansprüche

1. Verfahren zum Laserstrahlschweißen, wobei das Verfahren die Schritte umfasst: Einrichten eines betriebsfähigen gepulsten Faserlasers (20), der in einer Konfiguration zur Anwendung eines Hochdichtestrahls von Laserlicht in einer schmalen Bandbreite auf einer Verschmelzungszone (26) an einem Schweißmaterial platziert ist, wobei das Schweißmaterial Titan oder Titanlegierung ohne ein Füllmaterial ist; Einrichten von Spektrallinien für ein festgelegtes Schutzgas, wobei das Schutzgas Argon oder Helium ist;
Auswählen eines Emissionsspektrums für den Strahl (22) von Laserlicht; wobei das Emissionsspektrum für den Strahl von Laserlicht die Spektrallinien für das Schutzgas meidet und wobei der Schritt zum Auswählen eines Emissionsspektrums für den Strahl (22) von Laserlicht den Schritt zum Auswählen des Strahls von Laserlicht in einer Bandbreite von 1064 nm +/- 0,5 nm beinhaltet;
Nutzen des Schutzgases um den einen Schweißbereich (30), um Kontaminierung der Schweißnaht zu verhindern; und
Anwenden des Strahls (22) von Laserlicht an dem Schweißmaterial, um eine Schweißnaht in einem Schweißbereich (30) zu bilden.

2. Verfahren nach Anspruch 1, wobei:
der Anwendungsschritt weiter die Schritte umfasst zum: Ermitteln und Beibehalten einer numerischen Apertur für den Hochdichtestrahl (20);
Einrichten und Beibehalten eines Satzes von Strahldivergenzmerkmalen; und
Berechnen einer optimalen Brennpunktgröße.

3. Verfahren nach Anspruch 1, wobei:
die Konfiguration durch Auswählen einer oder mehrerer Eigenschaften aus der Gruppe ermittelt ist, beinhaltend: Strahlführung; numerische Apertur; Punktgröße; räumliches Profil; zeitliches Profil; Pulsdauer; Pulswiederholungsrate; Schweißpunktüberlappung; Schweißbefestigung; und Geschwindigkeit des Schweißens.

4. Verfahren nach Anspruch 3, wobei:
das Gas Argon ist und die Dicke des Titanschweißmaterials und die Punktgröße für einen visuellen Aspekt der Schweißnaht optimiert wurden.

## Revendications

1. Procédé de soudage par faisceau laser, ledit procédé comprenant les étapes de : l'établissement d'un laser à fibre pulsée opérationnel (20) placé dans une configuration pour appliquer un faisceau à haute densité de lumière laser dans une largeur de bande étroite sur une zone de fusion (26) à un matériau de soudure, dans lequel ledit matériau de soudure est du titane ou un alliage de titane sans matériau d'apport ; l'établissement de lignes spectrales pour un gaz de protection désigné, dans lequel ledit gaz de protection est de l'argon ou de l'hélium ;
la sélection d'un spectre d'émission pour ledit faisceau (22) de lumière laser ; dans lequel ledit spectre d'émission pour ledit faisceau de lumière laser évite lesdites lignes spectrales pour ledit gaz de protection et dans lequel l'étape de la sélection d'un spectre d'émission pour ledit faisceau (22) de lumière laser inclut l'étape de la sélection dudit faisceau de lumière laser dans une largeur de bande de 1064 nm +/- 0,5 nm ;
l'utilisation dudit gaz de protection autour de ladite région de soudage (30) pour empêcher toute contamination de ladite soudure ; et
l'application dudit faisceau (22) de lumière laser audit matériau de soudure pour former une soudure dans une région de soudage (30).

2. Procédé selon la revendication 1, dans lequel :
ladite étape d'application comprend en outre les étapes de : la détermination et le maintien d'une ouverture numérique pour ledit faisceau à haute densité (20) ;
l'établissement et le maintien d'un ensemble de propriétés de divergence de faisceau ; et
le calcul d'une taille optimale de point de focalisation.

3. Procédé selon la revendication 1, dans lequel :
ladite configuration est déterminée par la sélection parmi une ou plusieurs caractéristiques dans le groupe se composant de : distribution de faisceau ; ouverture numérique ; taille de point ; profil spatial ; profil temporel ; durée d'impulsion ; taux de répétition d'impulsion ; chevauchement de points de soudure ; dispositif de soudage ; et vitesse de ladite soudure.

4. Procédé selon la revendication 3, dans lequel :
ledit gaz est de l'argon, et l'épaisseur de matériau de soudure au titane et ladite taille de point ont été optimisées pour un aspect visuel de la soudure.
